# EUROPEAN PATENT SPECIFICATION

(11) **EP 1 431 793 B1**
(45) Date of publication and mention of the grant of the patent: **08.06.2011**
(21) Application number: 03425666.9
(22) Date of filing: 15.10.2003
(51) Int. Cl.: G02B 6/44, H02G 15/076

(54) **Cable junction box, particularly for optical fibre cables**
Kabelverbindungsgehäuse, insbesondere für Lichtwellenleiterkabel
Boîtier de jonction de câbles, en particulier pour câbles à fibres optiques

(30) Priority: 20.12.2002 IT RM20020636
(43) Date of publication of application: 23.06.2004
(73) Proprietor: FIBOT HOLDING LTD., Pieta'MSD - Malta (MT)
(72) Inventor: Vella Gregory, Joseph Fibot Holding Ltd., Pieta' MSD Malta (MT)
(74) Representative: Iannone, Carlo Luigi

(56) References cited:
- EP-A- 1 160 608
- EP-A- 1 199 589
- EP-A- 1 293 815
- US-A- 6 061 492

## Description

The present invention relates to a cable junction box, particularly for optical fibre cables.

More particularly, the junction box according to the invention allows to manage the joint, storage and/or passage of the fibres of a plurality of cables, even with different constructive features.

Generally speaking, a junction box is used to join two cable parts, that are part of a connection and/or more generally a telephone network.

Junction box is outside comprised of two main bodies: a substantially flat base body, and a cap, having an innerly hollow dome shape.

On the base, two cylindrical cable passages are provided having a circular section, for inlet of the cable parts to be joined. Cable passages are closed and opened only to receive the cables. Closure of each cable passage, after the insertion the relevant cable, usually restores by a heat-shrinking tube. This operation, when the cable passage contains only one cable, can be easily carried out.

Within the junction box a plurality of junction modules are provided, where the fibres are joined and/or housed, comprised by a support plate and by a junction plate, said modules being provided with paths for the fibres comprising each cable and being fixed on a frame integral with the base.

Recently, in the optical fibre field, always more urgent is the need of new connections and the need of increasing the existing connection networks, in order to conform to the continuous growing of the traffic intensity. Consequently, junction boxes presently installed are always more a nodal point of the network, rather than a junction element between two cables, wherein a plurality of cables converges and is switched, being it possible that said cables are of different type and have different importance for the transmission.

Construction modes of the junction boxes presently available on the market are not specifically directed to the solution of the problems arising from the need of managing at the same time a plurality of cables.

US 6 061 492 discloses an apparatus for providing a readily rearrangeble interconnection point between two fibre cables wherein a panel has a plurality of trays for holding joint fibre pairs, pivotally attached to the panel. The number of trays is dependent on the height of the panel. Thus, the apparatus according to this solution can be inadequate when the number of fibre cables increases.

EP 1 160 608 discloses a cable junction box for optical fibres comprising a base plate provided with passage holes and a cap cover, means for sealingly coupling said base plate to said cap cover, means for passing and blocking cables through said base plate and means for junction and housing said optical fibres under accomodation of any extra length and realisation of anti-stress paths, said means for junction and housing comprising a plurality of trays hinged to at least a support plate placed on a frame integral with the base plate of the junction box. Said frame is comprised of two parts, each constituted by a couple of vertical lateral bars interconnected by an horizontal cross bar and defining two sides of the frame. Support plates can be placed on both sides, thus increasing the number of trays available for the fibres. In order to allow to use a variable number of support plates, by adding or removing some of them, said at least one support plate is rton-fixedly coupled to said frame.

When the number of fibres and their length increase, the space available on said means for junction and housing can become to small, and it is common practice to collect them inside the space defined between the two sides of the support frame. Nevertheless, the risk exists that the fibres can push on the rear part of the at least one support plate, thus causing the detachment of the support plate from the frame.

In this situation it is provided the solution according to the present invention, aiming at providing a universal junction box, satisfying the new multifunctional need of a nodal point and providing all the possible use features of the cables. In particular, the cable junction box allows to manage at the same time a plurality of cables, providing for sufficient space for their arrangement in an ordered manner and for a reliable attachment of the trays and their support plates to a support frame.

It is therefore specific object of the present invention a cable junction box, particularly for optical fibre cables, as claimed in claim 1.

Further features of the cable junction box of the present invention are specified in the subsequent dependent claims.

The present invention will be now described, for illustrative but not limitative purposes, according to its preferred embodiments, with particular reference to the figures of the enclosed drawings, wherein:
figure 1 shows a perspective view of an embodiment of the junction box of the present invention without the cap;
figure 2 shows a front view of the junction box of figure 1;
figure 3 shows a perspective view of a multiple junction between a single main cable passage and a plurality of smaller cable passages of the junction box of figure 1;
figure 4 shows a perspective view of the frame of the junction box of figure 1, on which some modular elements are mounted;
figure 5 shows a perspective view of blocking means of the tubes containing the single fibre of the junction box of figure 1;
figure 6 shows a perspective view of the front face of the dispenser of the junction box of figure 1:
figure 7 shows a perspective view of the rear face of the dispenser of the junction box of figure 1;
figure 8 shows a perspective view of a support plate according to the prior art;
figure 9 shows a perspective view of the front face of the base of a support plate of the junction box of figure 1;
figure 10 shows a perspective view of the rear face of the base of a support plate of the junction box of figure 1;
figure 11 shows a perspective view of the front face of the base of a support plate of the junction box of figure 1, on which the support for the junction plates is mounted;
figure 12 shows a perspective view of the front face of support plate for the junction plates of the junction box of figure 1;
figure 13 shows a perspective view of the rear face of support plate for the junction plates of the junction box of figure 1;
figure 14 shows a perspective view of a junction module with the junction box of figure 1, according to a first embodiment;
figure 15 shows a perspective view of a first face of a junction plate, according to a second embodiment, and
figure 16 shows a perspective view of a second face of a junction plate according to a second embodiment.

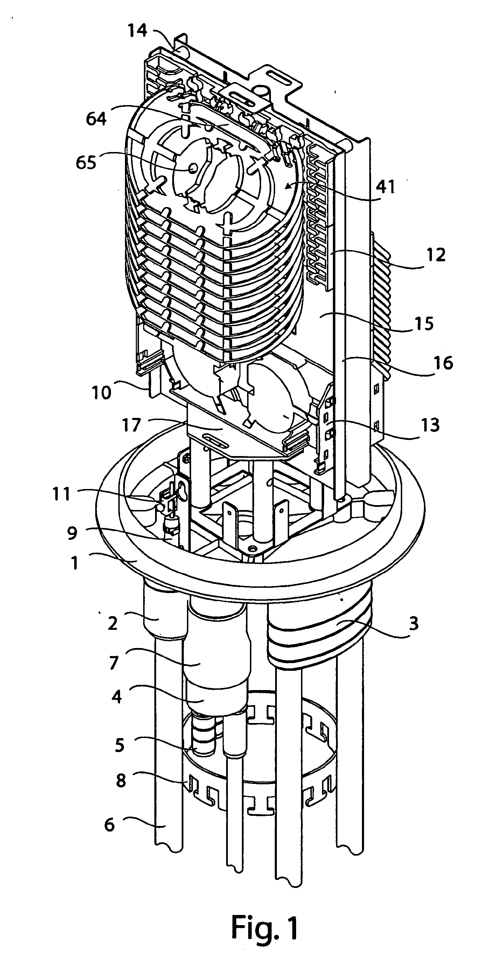

Making reference to the figures, particularly making first reference to the figure 1, junction box according to the present invention is comprised of a junction box base 1, on which a plurality of circular section, cylindrical cable passages 2 and an elliptical section, cylindrical cable passage 3 are provided, serving to host the eventual continuous cable passing through the junction box in case it is necessary to withdraw and joint only some fibres of the cable.

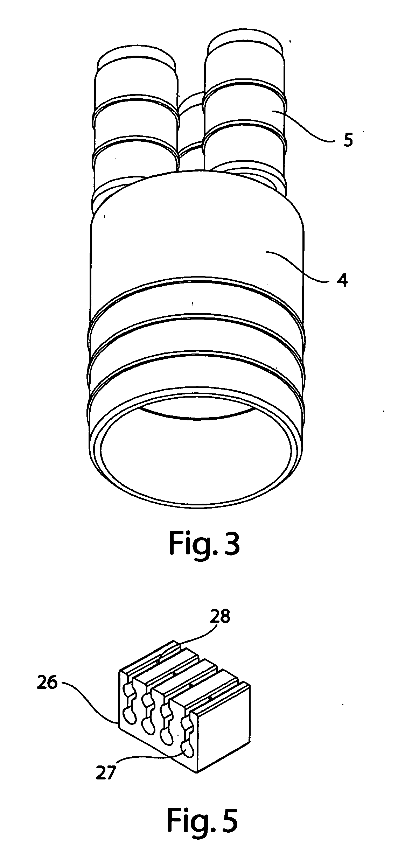

If the number of cable passages 2 is not sufficient to house all the cables 6, one or more multiple junctions 4 are used, providing a first end sealing applied on the cable passage 2 and a second end, ending with more than one smaller cable passage 5, each of them being destined to a single portion of cable 6, and wherein the same insertion and closure operations necessary for the bigger cable passages 2 can be repeated. A view of the multiple junction is also shown in figure 3.

To ensure a sealing closure of the junction box after the insertion of the cable 6 portions, about each cable passage and to the relevant cable, a heat shrinking element 7 is provided, that is afterwards heated, making it shrinking, as to adhere to the same.

During the opening and access steps to the inner components, junction boxes are extracted from the well wherein they are usually positioned, thus cable 6 being subjected to a traction and torsion action that could damage the sealing of the heat shrinking element 7. Damages that said operation can cause are as more probable as high is the number of cables housed within the junction box.

Universal junction box according to the present invention solves this problem by solutions outside and inside the junction box. An outer ring 8 blocking the cables, mechanically resistant, is provided outside the junction box, and is provided with teeth to which the cables are fixed, e.g. by an adhesive band. Within the junction box, each cable is further blocked by a cable tightening ring 9, integral with the junction box base and/or the frame 10.

Furthermore, blocking, single and/or multiple clamps 11 are present, for the possible cable traction members.

The cable containing the optical fibres is thus coupled to the junction box, the part of said cable blocked within the junction box being the point following which the cable is opened and each single fibre, along with the corresponding tube containing the same, can be handled separate from the others. Fibres are thus directed toward the different guide modular elements 13 and the junction elements, the latter being comprised each one of a junction plate 12 and of a junction plate 41, contained within the junction box.

Said modular guide elements or dispenser 13 and said junction modular elements are placed on said frame 10, comprised of two flat faces 15. Between the two faces 15 a space is obtained, by spacers 14, to receive single or multiple fibre elements.

Edges 16 of the two flat faces 15 are "L" folded, to ensure a mechanical resistance of the whole structure.

Frame 10 is fixed to the junction box base 1 by a mechanically resistant support 17, having reduced sizes with respect to the same frame, and realised in such a way to guarantee the presence, between the junction box base 1 and the frame 10, of a space allowing the positioning and the working of the cables and/or fibres arriving from the junction box base 1.

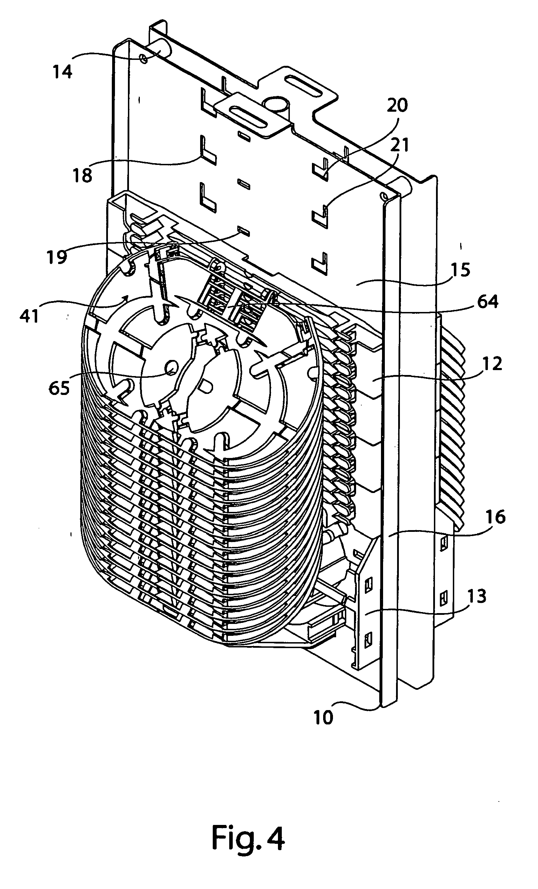

Making still reference to figure 1, and also to figure 4, support plate 12 and dispensers 13 are fixed to the frame 10, not by coupling the relevant lateral ends and the edges 16 of the same frame, by the coupling with the flat surface of the single faces 15, by a system that will be better described in the following and realising a high safety to prevent the occasional removal and to make safer the voluntary removal of said modular elements.

Each one of the flat faces 15 of the frame 10 is provided with a plurality of "flag" shaped lateral openings 18 and with rectangular central openings, at uniform and repetitive distances each other.

Lateral openings 18 are comprised of a wider rectangular portion 20, and of a more narrow rectangular portion 21, perpendicular each other on correspondence of the minor sides, so as to obtain the "flag" shape. Making reference to the figures 4, 7 and 10, wider rectangular portion 20 serves for hooking the junction plates 12, by the insertion within said portion 20 of the two fixed joint tabs 42 provided on the rear face of said support plates 12, while the more narrow rectangular portion 21 is used for the forced centring of the same modules.

Identical lateral openings (not shown) are provided for the hooking of the dispensers 13, by the insertion of the four fixed joint tabs 42' provided on the rear face of the same.

Furthermore, on the rear face of each support plate 12 it is provided an elastic tab 22, release into the central opening 19 of the flat face 15 of the france 10.

In order to prevent the wrong positioning of the support plates 12 in the zones dedicated to the dispensers 13 and vice versa, lateral coupling openings 18 destined to the support plates and those (not shown) destined to the dispensers 13 are placed in a different way.

Static compactness of the assembly makes it very safe the operation of the universal junction box in every operative or accidental situation.

Modular elements that can be present in the junction box are essentially three kinds, junction modules, "dispenser" type guide modules 13 and housing modules (not shown) for the splitters and/or mixers (not shown as well).

Making reference to figure 1, dispenser 13 is coupled to the flat surface 15 of the frame 10. Usually, two dispensers 13 are provided for each junction box, hooked to the two opposed flat faces of the frame.

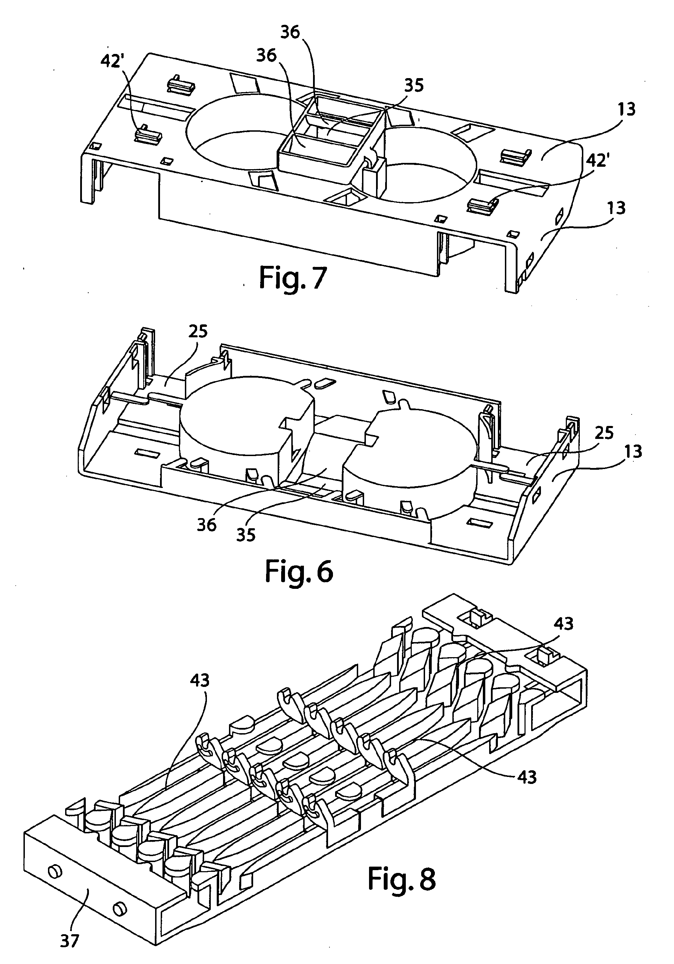

Fibres arrive to the dispenser 13 coming directly from the cables 6 on the junction box base 1. Making reference to figures 6 and 7, each dispenser 13 is comprised of a front face provided with projections defining paths for housing the additional length of the fibres, and of a rear face, on which the fixed joint tabs 42' are provided for coupling with the openings (not shown, but identical to the openings 18 for coupling with the fixed joint tabs 42 of the junction plates 12) of the flat face of the frame 10.

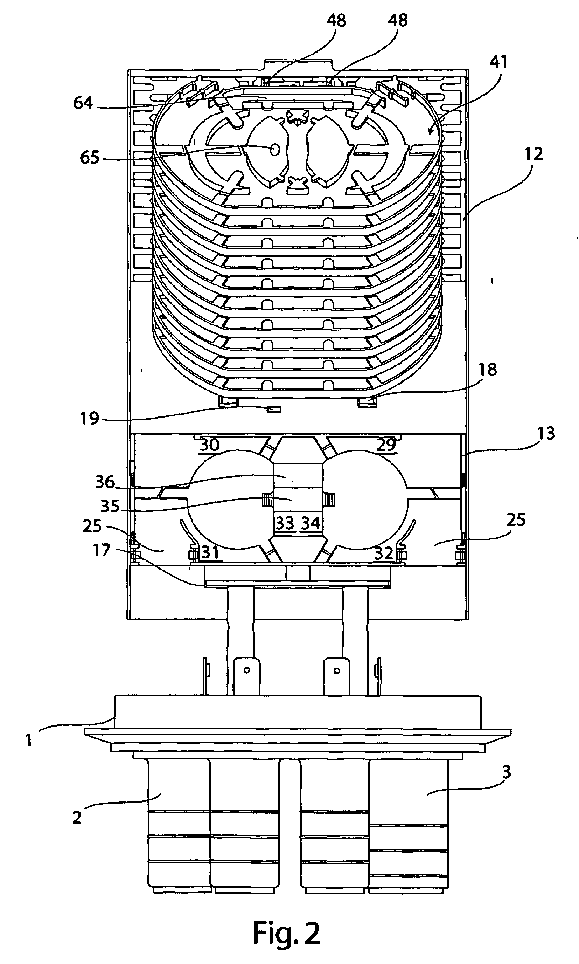

Making reference to the figure 2, fibres placed on the front face of the dispenser 13 can pass through the path passing along points 29, 30, 31 and 32, or along points 29, 33 and 31, or even 30, 34 and 32. The latter paths allow the inversion of the laying down of the fibres.

Making reference to figures 2, 5 and 6, means 25 for housing means blocking the tubes containing the single fibres are present on the lateral ends of the dispensers 13.

Particularly, said blocking means 26 have a parallelepiped shape and are crossed from a base to the opposed base, by cylindrical channels 27 provided according to a honeycomb pattern. On one of the lateral faces, cuts 28 are provided parallel each other, extending all along the length of the face. Cuts 28 extend in depth up to reaching the underlying cylindrical channels 27 and comprising a passage among the same.

Said cylindrical channels 27 block the cut end of the tubes containing the fibres, arriving from the cables, from which the bare fibres, i.e. not covered by the relevant housing tube, are directed toward the dispenser 13 paths, and then toward the junction modules. Cuts 28 allow to block the tubes and to make the fibres passing without the need of inserting them within the channel all along the length, but rather inserting them laterally.

Making again reference to figures 6 and 7, as well as to figures 1 and 2, dispenser 13 allows also the passage of the fibres from a flat face 15 to the opposed face of the frame 10, to have an easier distribution of the same fibres before they are directed to the junction modules 12. Passage is realised through a rectangular opening 35 in the central part of the dispenser 13, communicating, through a corresponding opening in both flat faces 15, with an identical opening 35 of the dispenser provided on the opposed face of the frame 10. On the four sides of the opening 35, a corresponding number of walls 36 is provided, rounded according to a curvature ray bigger than the critical curvature ray of the same fibres.

At the exit of the dispenser 13, fibres are directed toward the junction modular plates 12, placed in series on the frame 10, progressively covering the flat surface of the two faces 15 of the same frame.

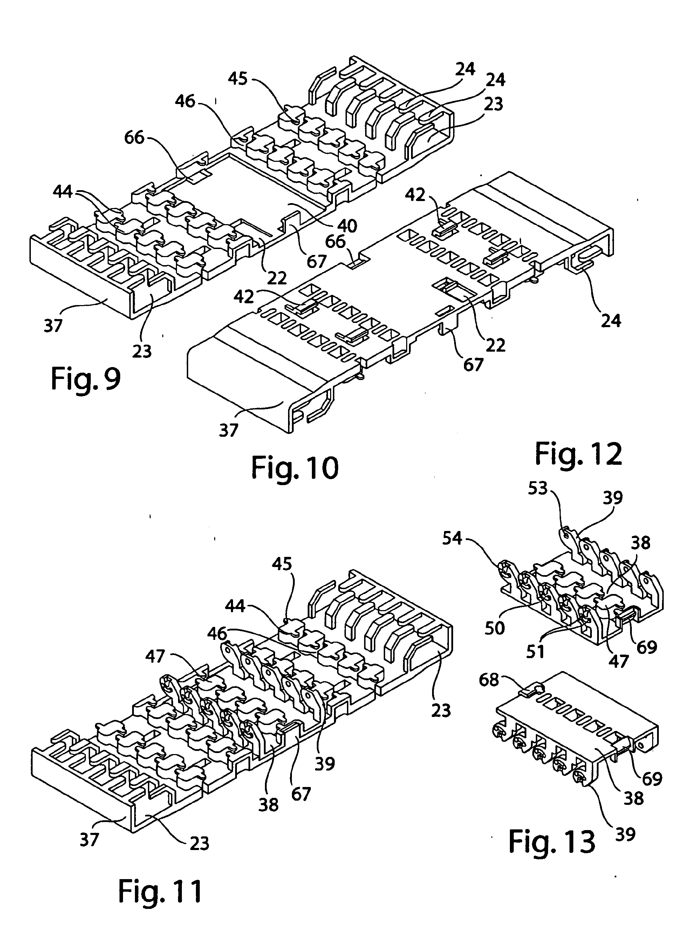

Making reference to figure 9, the two lateral ends 23 of each support plate 12 are "L" folded toward the front face of the same plate. Fibre paths are realised on said lateral ends 23 of the support plates 12, defined and protected by tabs 24, regularly spaced on both sides of both paths, tabs 24 of the first side of each path being offset with respect to those of the second side.

Being the junction modules provided in series along the flat faces 15 of the frame 10, paths for the fibres present at the two lateral ends 23 of each one of said support plates 12 realise, along with corresponding paths of the other support plates, two continuous paths. In the first one of said paths, all the fibres are housed arriving from the part of the frame 10 closer to the junction box base 1 toward the relevant junction modules, while in the second one the fibres are housed that from the junction modules come back toward the junction box base 1.

Making now reference to figure 9-13, support plates 12 are each one comprised of a base 37 and of a support 38. In the central zone of the base 37 it is provided a seat 40 recessed for the fixed joint of the support 38. Seat 40 further provides an opening 66 and a blocking tab 67, said opening 66 aiming to the insertion of a corresponding tab 68 provided on the rear face of the support 38 and said tab 67 blocking the support 38, coupling with corresponding fixed joint means 69 provided on the support 38.

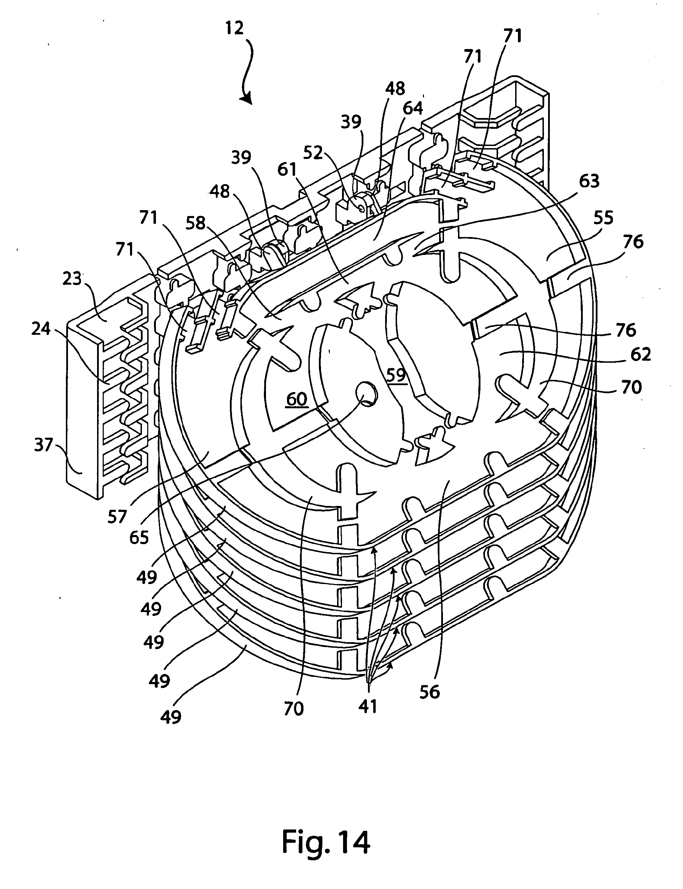

Hinges 39 are present on the front face of support 38, realising the coupling point with the junction plates 41 (as shown in figure 14).

Two fixed joint tabs 42 are present on the rear face of the base 37 of the support plate 42, allowing the coupling with the flat face 15 of the frame 10, by inserting these fixed joint tabs 42 in the lateral "flag" shaped openings 18, and an elastic tab 22, release in the central opening 19 of the flat face 15 of the frame 10.

The elastic tab 22 can be reached from the front face of the base 37 through the recessed seat 40, for the fixed joint insertion of the support 38. Thus, if support 38 is inserted, said elastic tab 22 is pressed into the central opening 19, preventing the detach of the base 37 of the support plate 12 from the flat face 15 of the frame 10. Further, elastic tab 22 can be reached only removing before the support 38. Thus, once inserted, the junction plate 12 can be removed only removing first the support 38.

This solution prevents every dangerous or casual removal of the junction plate 12 and determines a high safety degree for this operation.

Fibre guide means 44 are further provided on the front face of the base 37 of the support plate 12, departing from the two lateral ends 23 of the same plate, and reaching the relevant junction plates 41.

Making reference to figure 8, according to the known solutions, said guide means are comprised of single grooves 43, each one destined to the fibres for a specific junction plate.

Making reference to figures 9 and 11, each support plate 12 of the junction box according to the present invention comprises fibre guide means 44, allowing to exploit multiple, free and not set before, paths, that can adapt to the mechanical features of the fibre cladding, thus preventing any residual bending moment of the same, due to permanent their positioning and/or to the following motion from the junction plates 41.

Free paths are realised replacing the fixed grooves 43 provided according to the known teachings, with parallelepiped projecting elements, having rounded corners of teeth 44, provided along four rows passing through the base 37 of the junction plate 12, according to directions parallel to those defined by the lateral ends 23, said four rows being divided into two pairs, one of which is on one side with respect to the seat 40 for the fixed joint coupling of the support 38, and the other one is on the opposite side. Teeth 44 of the first row of each pair are offset with respect to the teeth of the second row.

Each tooth 44 has, on its upper face, in correspondence of each one of the lateral faces faced toward two adjacent teeth 44 of the same row, a tab 45, faced toward the adjacent tooth of the same row, from which a corresponding tab 45 projects, offset with respect to the first one, in such a way that the two tabs 45 reach each other and the adjacent tooth, remaining spaced to allow the insertion of the fibres. Fibres passing through the zone between two adjacent teeth of the same row are thus within a seat 46 protected, but open, defined by the surface of the front face of the support plate, by the opposed faces of the two adjacent teeth of the same row and by the tabs of the same teeth 45.

Presence and positioning of the teeth allow a free and anti-stress movement of the fibres.

Support 38 too has a row of teeth 47 as those described in the above, guiding the fibres destined to each junction plate 41.

A remarkable advantage due to the free path of the fibres on the support plate 12 and to the independence between base 37 and support 38 of the support plate 12 is the possibility of housing junction plates having different shape and thickness using the same support plate 12, only replacing the support 38 with a second support, the hinges of which are positioned at a different distance each other. Thus, the same system allows to use junction plates that can house a different number of fibres.

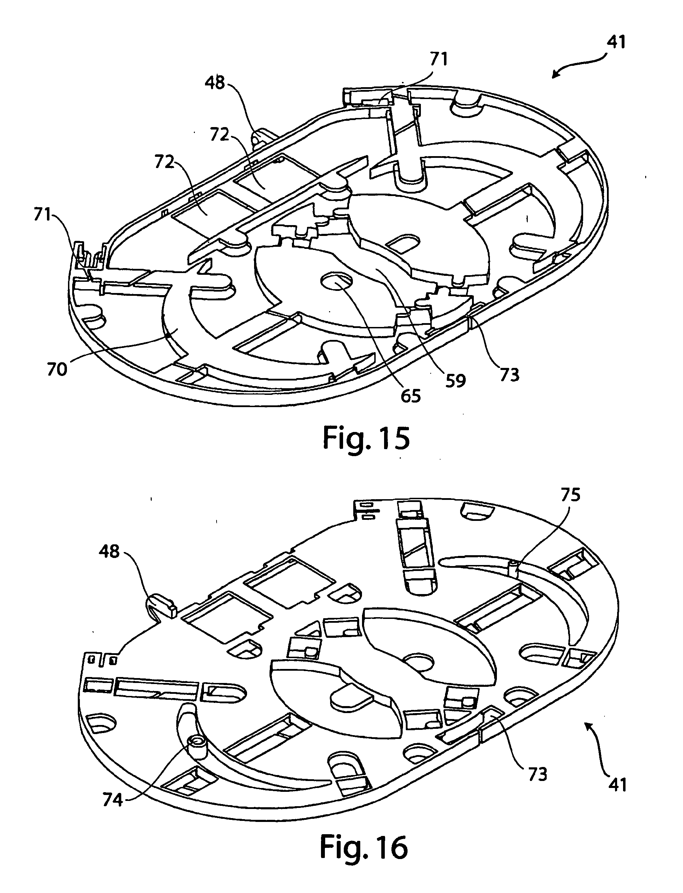

Making reference to figures 14 and 15, each junction plate 41 has a substantially flat shape, a face of which having a series of paths limited by perimeter walls 49 and projections 70, said paths being realised in such a way to contain all the necessary additional length of the fibres, respecting the minimum curvature ray of the same.

On the surface of the junction plate 41 a peripheral path can be realised for the elliptically shaped fibres (through the passage points identified by reference numbers 55, 56 and 57), three circular paths, intersecting each other (through the passage points identified by reference numbers 57, 58 and 59; 56, 60, 61 and 62; 59, 63 and 55).

Central groove 59 of the "I" shaped junction plate 41, also allows the inversion of the path of the single fibres. Said inversion allows to make the fibres exiting from the same entrance passage 71 through which they entered into the junction plate 41 (for example passing through the points indicated by the reference numbers 55, 59, 58, 57, 56 and 55).

Channel 64 of the junction plate 41 is destined to the fixed joint housing of the elements (not shown) for the mechanical housing, functional for the junction of the fibres that, according to kind of restoration of the joints, can be replaced with others.

Further, junction plate 41 has an opening 65 for fixed coupling with a corresponding pin provided on a lid (not shown), shaped according to the shape of the same junction plate 41. Lid ensures a better protection for the fibres contained within the junction plate 41, particularly for the junction plate 41 positioned at the end of the series and that is not covered by the adjacent junction plate 41.

Fibres arriving from base 37 of the support plate 12 are inserted within the junction plate 41 through one of the entrance passages 71 provided on the side of the junction plate closer to the support plate 12. Particularly, to prevent that fibres are curved more than allowed by the requirements concerning the minimum curvature ray, entrance openings are close to the most outer path of the junction plate, i.e. that having the widest curvature ray, and oriented according to a direction as more possible parallel to that of the possible paths for the fibres on the plate.

In order to ensure the fulfilment of the minimum curvature ray for each possible position of the junction plate 41, rotating about the hinges 39 of the support 38, to which said junction plate 41 is hinged by pivots 48, fibres arriving from one of the lateral ends 23 of the base 37 of the support plate 12 are inserted within one of the entrance passages 71 far away from the arrival lateral end 23.

Two pivots 48 of each junction plate are release coupable with two corresponding hinges 39 of the support 38. Fixed joint coupling is allowed by pins 52 of the pivots 48 inserting into the corresponding openings 53 of the hinges. Insertion of the pins 52 within opening 53 is further facilitated by openings 54 guiding the pins 52 in the path toward the opening 53.

Positioning of the different junction plates 41 and the movements allowed by the same are such that, at rest, junction plate 41 are placed one above the other one. To operate on a junction plate 41, it is necessary to rotate all those above the same about the corresponding hinges, so as to make the paths defined on the junction plate 41 reachable.

In order to make the intervention on a junction plate 41 easier, it is advisable that all the junction plates 41 can be self-suspending. Making reference to figure 12, this result is realised providing that on the surface of each hinge 39 faced toward the corresponding pivot 48 of the junction plate 41, is provided a hemi-circular groove 50 that, in correspondence of both its ends, is provided with a deeper hemi-circular seat 51. Said groove 50 and said hemi-spherical seat 51 are destined to house a corresponding hemispherical projection (not shown), obtained on the surface of the pivots 48 faced toward the hinges 39, respectively during the rotation of the junction plate 41 and in the two stop positions of the same.

Junction plates shown in figure 15 are provided with two openings 72, to make the access to the support plate easier for the operator, also when the junction plates are mounted.

Further, making reference to figures 15 and 16, junction plate 41 can include an interface opening 73 and, on the second face, two complementary fixed joint elements, a female element 74 and a male element 75.

Two junction plates 41 of the kind shown in figures 15 and 16 can be coupled exploiting the complementary fixed joint elements 74, 75 of the second side, thus realising a double face junction plate 41. The two junction plates 41 are both provided with an interface opening 73, the function of which is to allow the passage of the fibre from a junction plate 41 to the relevant coupled junction plate 41, without modifying the path and/or exit from the double face junction plate 41. This possibility allows to house a longer fibre, that is useful in case of complicated intervention.

Further, each junction plate 41 of this second type is provided with a single pivot 48 for fixed joint with the relevant hinge 38 provided on the support plate 38. This feature is important to allow the housing of the junction plates 41 coupled on the support plates 12. Nevertheless the single junction plate 41 can be produced including both pivots 48 necessary to the housing, independently from the coupling with a second junction plate 41. In this case, to allow the coupling, one pivot 48 must be before removed from each junction plate 41, or it must be done only on one of the two junction plates, removing both pivots 48, while the other one maintains them.

Double face junction plate 41 thus realised uses the same assembling architecture of the junction plates shown in figure 14.

This second solution allows to recover more than 75% of the space occupied by the whole junction plates 41 used.

A second advantage, very important for more complex operations, is that of being able to pass from a face to the other of the double face junction plate 41, through the interface opening 73, without changing the path and without exiting from the double face junction plate, thus being possible to house a longer fibre.

Housing modular elements of splitters and/or mixers are similar to the junction ones described in the above, employing modified junction plates, suitable to house these accessories.

In view of the technical solutions described, within the same junction box it is possible to house at the same time different kind of modular elements. Particularly, junction modules and housing modules of splitters and/or mixers can use support plates 12 identical to those used for the single or double face junction plates 41, thanks to the possibility of using different support 38.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Cable junction box, particularly for optical fibre cables, comprised of a junction box base (1) and of a cap for sealing closing, means (2, 3) for entrance of the cables (6) within the junction box, means (13) for guiding the optical fibres coming from the cables (6) and means (12, 41) for junction and housing the optical fibres, said means (2) for entrance of the cables (6) within the junction box being each one provided with sealing closure means (7), said means (12, 41) for junction and housing being comprised of at least a support plate (12), on which a plurality of junction plates (41) is hinged, said optical fibre guide means (13) and said optical fibre junction and housing means (12, 41) being placed on a frame (10) integral with the junction box base (1), **characterised in that** said frame (10) is comprised of two substantially flat faces (15), between which a space is defined for collection of fibre elements, and on the flat surface of which coupling means (18, 19) are provided, for coupling with corresponding coupling means (42) provided on the rear face of said optical fibre guide means (13) and with corresponding coupling means (22, 42) provided on the rear face of said support plates (12).

2. Cable junction box according to claim 1, **characterised in that** said space between said flat faces (15) of the frame (10) is guaranteed by a plurality of spacers (14).

3. Cable junction box according to claim 1 or 2, **characterised in that** said flat faces (15) of the frame (10) are provided with stiffening means.

4. Cable junction box according to claim 3, **characterised in that** said stiffening means comprise a "L" folding of the flat face (15) edges (16).

5. Cable junction box according to any of the preceding claims, **characterised in that** said coupling means (18, 19) provided on the flat surface of each one of the frame (10) faces (15) comprise a plurality of openings (18, 19), including at least a pair of lateral openings (18), for coupling with corresponding means (42) provided on the rear face of said at least a support plate (12) and at least a second pair of lateral openings for coupling with corresponding means (42') provided on the rear face of said optical fibre guide means (13).

6. Cable junction box according to claim 5, **characterised in that** said openings for coupling with corresponding means (42') provided on the rear face of said optical fibre guide means (13) are differently spaced from each other with respect to said at least one pair of lateral openings (18) for coupling with corresponding means (42) provided on the rear face of said at least one support plate (12).

7. Cable junction box according to any of the preceding claims, **characterised in that** it further comprises splitter and/or mixer housing modules.

8. Cable junction box according to any of the preceding claims, **characterised in that** said support plates (12) are comprised of a base (37) and of a support (38), on the rear face of said base (37) means (22, 42) for coupling with corresponding means (18, 19) present on the surface of the flat faces (15) of the frame (10) being provided, and on the front face of said base (37) means (23) for guiding the fibre bundles directed toward - the adjacent junction boxes, means (44) for guiding the fibres toward the junction plates (41) and means (40, 66, 67) for housing the support (38) being provided, on the rear face of said support (38) means (68, 69) for coupling with corresponding means (66, 67) present on the front face of the base (37) being provided, and on the front face of said support (38) means (39) for coupling with corresponding means (48) of the junction plates (41) and means (44) for guiding the fibres toward the junction plates (41) being provided.

9. Cable junction box according to claim 8, **characterised in that** said means (40, 66, 67) provided on the base (37) for housing said support (38) comprise a recessed seat (40), having the same shape and dimensions of the rear face of the support (38), for the fixed insertion of the support (38), an opening (66) and a blocking tab (67), provided on the base, respectively for the insertion of a corresponding tab (68) and for the coupling with a corresponding fixed joint element (69), provided on the support (38).

10. Cable junction box according to any of the preceding claims 8-9, **characterised in that** said coupling means (22, 42) provided on the base (37), for coupling with said corresponding means (18, 19) provided on the surface of the flat faces (15) of the frame (10) can be reached only if said base (37) is not coupled with said support (38).

11. Cable junction box according to any of the preceding claims 8-10, **characterised in that** said fibre guide means (44), provided on the base (37) and on the support (38), comprise a plurality of projecting elements or teeth (44), having a polygonal base prism shape with rounded corners.

12. Cable junction box according to any of the preceding claims 8-11, **characterised in that** between each tooth (44) and the adjacent one a protected seat (46) is realised by at least a tab (45) for each tooth (44), projecting toward the adjacent tooth.

13. Cable junction box according to any of the preceding claims, **characterised in that** said means (2, 3) for the entrance of the cables (6) within the junction box comprise at least a multiple joint (4), a first end of which can be sealing applied to the cable passage (2, 3) and a second end of which ends with a plurality of smaller cable passages (5), each one destined to a single cable (6) piece.

## Patentansprüche

1. Kabelverbindungsbox, insbesondere für Optikfaserkabel, umfassend eine Verbindungsboxbasis (1) und eine Kappe zum dichtenden Schließen, Mittel (2, 3) zum Einlass der Kabel (6) in die Verbindungsbox, Mittel (13) zum Führen der Optikfasern, kommend aus den Kabeln (6), und Mittel (12, 41) zur Verbindung und Beherbergung der Optikfasern, wobei die Mittel (2) zum Einlass der Kabel (6) in die Verbindungsbox jeweils versehen sind mit dichtenden Verschlussmitteln (7), wobei die Mittel (12, 41) zur Verbindung und Beherbergung zumindest eine Stützplatte (12) umfassen, an der eine Vielzahl von Verbindungsplatten (41) angelenkt ist, wobei die Optikfaserführungsmittel (13) und die Optikfaserverbindungs- und Beherbergungsmittel (12, 41) platziert sind an einem Rahmen (10) integral mit der Verbindungsboxbasis (1), **dadurch gekennzeichnet, dass** der Rahmen (10) zwei im Wesentlichen flache Flächen (15) umfasst, zwischen denen ein Raum zum Sammeln von Faserelementen definiert ist, und an der flachen Oberfläche davon Kopplungsmittel (18, 19) vorgesehen sind zum Koppeln mit entsprechenden Kopplungsmitteln (42), die an der hinteren Fläche der Optikfaserführungsmittel (13) vorgesehen sind, und mit entsprechenden Kopplungsmitteln (22, 42), die an der hinteren Fläche der Stützplatten (12) vorgesehen sind.

2. Kabelverbindungsbox gemäß Anspruch 1, **dadurch gekennzeichnet, dass** der Raum zwischen den flachen Flächen (15) des Rahmens (10) mittels einer Vielzahl von Abstandshaltern (14) gewährleistet wird.

3. Kabelverbindungsbox gemäß Anspruch 1 oder 2, **dadurch gekennzeichnet, dass** die flachen Flächen (15) des Rahmens (10) mit Versteifungsmitteln versehen sind.

4. Kabelverbindungsbox gemäß Anspruch 3, **dadurch gekennzeichnet, dass** die Versteifungsmittel eine "L"-Faltung der Kanten (16) der flachen Fläche (15) umfassen.

5. Kabelverbindungsbox gemäß einem der vorhergehenden Ansprüche, **dadurch gekennzeichnet, dass** die Kopplungsmittel (18, 19), vorgesehen an der flachen Oberfläche von jeder der Flächen (15) des Rahmens (10), eine Vielzahl von Öffnungen (18, 19) umfassen, einschließlich zumindest einem Paar lateraler Öffnungen (18) zum Koppeln mit entsprechenden Mitteln (42), vorgesehen an der hinteren Fläche der zumindest einen Stützplatte (12), und zumindest einem zweiten Paar lateraler Öffnungen zum Koppeln mit entsprechenden Mitteln (42'), vorgesehen an der hinteren Fläche der Optikfaserführungsmittel (13).

6. Kabelverbindungsbox gemäß Anspruch 5, **dadurch gekennzeichnet, dass** die Öffnungen zum Koppeln mit entsprechenden Mitteln (42'), vorgesehen an der hinteren Fläche der Optikfaserführungsmittel (13), unterschiedlich beabstandet sind voneinander in Bezug auf das zumindest eine Paar lateraler Öffnungen (18) zum Koppeln mit entsprechenden Mitteln (42), vorgesehen an der hinteren Fläche der zumindest einen Stützplatte (12).

7. Kabelverbindungsbox gemäß einem der vorhergehenden Ansprüche, **dadurch gekennzeichnet, dass** diese ferner Splitter- und/oder Mixerbeherbergungsmodule umfasst.

8. Kabelverbindungsbox gemäß einem der vorhergehenden Ansprüche, **dadurch gekennzeichnet, dass** die Stützplatten (12) eine Basis (37) und eine Stütze (38) umfassen, wobei an der hinteren Fläche der Basis (37) Mittel (22, 42) zum Koppeln mit entsprechenden Mitteln (18, 19), präsent an der Oberfläche der flachen Fläche (15) des Rahmens (10), vorgesehen sind, und an der vorderen Fläche der Basis (37) Mittel (23) zum Führen des Faserbündels gerichtet zu den benachbarten Verbindungsboxen, Mittel (44) zum Führen der Fasern zu den Verbindungsplatten (41) und Mittel (40, 66, 67) zur Beherbergung der Stütze (38) vorgesehen sind, wobei an der hinteren Fläche der Stütze (38) Mittel (68, 69) zum Koppeln mit entsprechenden Mitteln (66, 67), präsent an der vorderen Fläche der Basis (37), vorgesehen sind, und an der vorderen Fläche der Stütze (38) Mittel (39) zum Koppeln mit entsprechenden Mitteln (48) der Verbindungsplatten (41) und Mittel zum Führen der Fasern zu den Verbindungsplatten (41) vorgesehen sind.

9. Kabelverbindungsbox gemäß Anspruch 8, **dadurch gekennzeichnet, dass** die Mittel (40, 66, 67), vorgesehen an der Basis (37) zur Beherbergung der Stütze (38), einen ausgenommenen Sitz (40) umfassen, aufweisend die gleiche Form und Dimensionen der hinteren Fläche der Stütze (38), zum fixierten Einsatz der Stütze (38), eine Öffnung (66) und eine Blockierlasche (67), vorgesehen an der Basis, jeweils für den Einsatz einer entsprechenden Lasche (68) und zum Koppeln mit einem entsprechenden fixierten Verbindeelement (69), vorgesehen an der Stütze (38).

10. Kabelverbindungsbox gemäß einem der vorhergehenden Ansprüche 8-9, **dadurch gekennzeichnet, dass** die Kopplungsmittel (22, 42), vorgesehen an der Basis (37), zum Koppeln mit den entsprechenden Mitteln (18, 19), vorgesehen an der Oberfläche der flachen Flächen (15) des Rahmens (10), nur erreicht werden können, wenn die Basis (37) nicht mit der Stütze (38) gekoppelt ist.

11. Kabelverbindungsbox gemäß einem der vorhergehenden Ansprüche 8-10, **dadurch gekennzeichnet, dass** die Optikfaserführungsmittel (44), vorgesehen an der Basis (37) und an der Stütze (38), eine Vielzahl vorspringender Elemente oder Zähne (44) umfassen, aufweisend eine Polygonalbasisprismenform mit abgerundeten Ecken.

12. Kabelverbindungsbox gemäß einem der vorhergehenden Ansprüche 8-11, **dadurch gekennzeichnet, dass** zwischen jedem Zahn (44) und dem Benachbarten ein geschützter Sitz (46) realisiert ist mittels zumindest einer Lasche (45) für jeden Zahn (44), vorragend zu dem benachbarten Zahn.

13. Kabelverbindungsbox gemäß einem der vorhergehenden Ansprüche, **dadurch gekennzeichnet, dass** die Mittel (2, 3) zum Einlass der Kabel (6) in die Verbindungsbox zumindest eine Mehrfachverbindung (4) umfassen, wobei ein erstes Ende davon dichtend aufgebracht werden kann auf die Kabelpassage (2, 3), und ein zweites Ende davon mit einer Vielzahl kleinerer Kabelpassagen (5) endet, wobei jede für ein einzelnes Kabel-(6) Stück bestimmt ist.

## Revendications

1. Boîtier de jonction de câbles, en particulier pour câbles à fibres optiques, comprenant une base (1) du boîtier de jonction et un capuchon pour fermeture étanche, des moyens (2, 3) pour l'entrée des câbles (6) à l'intérieur du boîtier de jonction, des moyens (13) pour guider les fibres optiques sortant des câbles (6) et des moyens (12, 41) pour la jonction et le logement des fibres optiques, chacun desdits moyens (2) pour l'entrée des câbles (6) dans le boîtier de jonction étant pourvu de moyens de fermeture étanche (7), lesdits moyens (12, 41) de jonction et de logement étant constitués d'au moins une plaque support (12), sur laquelle est articulée une pluralité de plaques de jonction (41), lesdits moyens (13) de guidage des fibres optiques et lesdits moyens (12, 41) de jonction et de logement de fibres optiques étant placés sur un châssis (10) solidaire de la base (1) du boîtier de jonction, **caractérisé en ce que** ledit châssis (10) est constitué de deux faces (15) sensiblement planes entre lesquelles est défini un espace pour le regroupement des éléments de fibres, et sur la surface plane duquel sont prévus des moyens de couplage (18, 19) pour couplage avec des moyens de couplage (42) correspondants prévus sur la face arrière desdits moyens de guidage de fibres optiques (13) et avec des moyens de couplage (22, 42) correspondants prévus sur la face arrière desdites plaques support (12).

2. Boîtier de jonction de câbles selon la revendication 1, **caractérisé en ce que** ledit espace entre lesdites faces planes (15) du châssis (10) est garanti par une pluralité d'écarteurs (14).

3. Boîtier de jonction de câbles selon la revendication 1 ou 2, **caractérisé en ce que** lesdites faces planes (15) du châssis (10) sont pourvues de moyens raidisseurs.

4. Boîtier de jonction de câbles selon la revendication 3, **caractérisé en ce que** lesdits moyens raidisseurs comprennent un pliage en « L » des bords (16) de la face plane (15).

5. Boîtier de jonction de câbles selon l'une quelconque des revendications précédentes, **caractérisé en ce que** lesdits moyens de couplage (18, 19) prévus sur la surface plane de chacune des faces (15) du châssis (10) comprennent une pluralité d'ouvertures (18, 19), incluant au moins une paire d'ouvertures latérales (18), pour couplage avec des moyens correspondants (42) prévus sur la face arrière de ladite au moins une plaque support (12), et au moins une seconde paire d'ouvertures latérales pour couplage avec des moyens (42') correspondants prévus sur la face arrière desdits moyens de guidage de fibres optiques (13).

6. Boîtier de jonction de câbles selon la revendication 5, **caractérisé en ce que** lesdites ouvertures de couplage avec des moyens correspondants (42') prévus sur la face arrière desdits moyens de guidage de fibres optiques (13) sont différemment espacées les unes des autres par rapport à ladite au moins une paire d'ouvertures latérales (18) de couplage avec des moyens correspondants (42) prévus sur la face arrière de ladite au moins une plaque support (12).

7. Boîtier de jonction de câbles selon l'une quelconque des revendications précédentes, **caractérisé en ce qu'**il comprend, en outre, des modules de logement séparateurs et/ou mélangeurs.

8. Boîtier de jonction de câbles selon l'une quelconque des revendications précédentes, **caractérisé en ce que** lesdites plaques support (12) sont constituées d'une base (37) et d'un support (38), **en ce que** sont prévus, sur la face arrière de ladite base (37), des moyens (22, 42) de couplage avec des moyens correspondants (18, 19) présents sur la surface des faces planes (15) du châssis (10), et sur la face avant de ladite base (37), des moyens (23) de guidage des faisceaux de fibres orientés vers les boîtiers de jonction adjacents, **en ce que** sont prévus des moyens (44) de guidage des fibres vers les plaques de jonction (41) et des moyens (40, 66, 67) pour recevoir le support (38), **en ce que** sont prévus, sur la face arrière dudit support (38), des moyens (68, 69) de couplage avec des moyens (66, 67) correspondants présents sur la face frontale de la base (37), et **en ce que** sont prévus, sur la face frontale dudit support (38), des moyens (39) de couplage avec des moyens (48) correspondants des plaques de jonction (41) et des moyens (44) de guidage des fibres vers les plaques de jonction (41).

9. Boîtier de jonction de câbles selon la revendication 8, **caractérisé en ce que** lesdits moyens (40, 66, 67) prévus sur la base (37) destinée à recevoir ledit support (38) comprennent un logement en retrait (40) ayant la même forme et les mêmes dimensions que la face arrière du support (38) pour insérer le support (38) de manière fixe, une ouverture (66) et une patte de retenue (67), prévue sur la base, respectivement pour l'insertion d'une patte (68) correspondante et pour le couplage avec un élément d'articulation fixe (69) correspondant, prévu sur le support (38).

10. Boîtier de jonction de câbles selon l'une quelconque des revendications précédentes 8-9, **caractérisé en ce que** lesdits moyens de couplage (22, 42) prévu sur la base (37), pour couplage avec lesdits moyens correspondants (18, 19) prévus sur la surface des faces planes (15) du châssis (10) ne peuvent être atteints que si ladite base (37) n'est pas couplée audit support (38).

11. Boîtier de jonction de câbles selon l'une quelconque des revendications précédentes 8-10, **caractérisé en ce que** lesdits moyens de guidage de fibres (44), prévus sur la base (37) et sur le support (38), comprennent une pluralité d'éléments en saillie ou dents (44) ayant la forme d'un prisme à base polygonale à angles arrondis.

12. Boîtier de jonction de câbles selon l'une quelconque des revendications précédentes 8-11, **caractérisé en ce qu'**entre chaque dent (44) et la dent adjacente, un logement protégé (46) est réalisé par au moins une patte (45) pour chaque dent (44), faisant saillie vers la dent adjacente.

13. Boîtier de jonction de câbles selon l'une quelconque des revendications précédentes, **caractérisé en ce que** lesdits moyens (2, 3) pour l'entrée des câbles (6) à l'intérieur du boîtier de jonction comprennent au moins une jonction multiple (4), dont une première extrémité peut-être appliquée de manière étanche sur le passage de câble (2, 3) et dont une seconde extrémité se termine par une pluralité de passages de câbles (5) plus petits, chacun étant destiné à un seul câble (6) individuel.
